# EUROPEAN PATENT APPLICATION

(11) **EP 4 549 644 A1**
(43) Date of publication of application: **07.05.2025**
(21) Application number: 23831551.9
(22) Date of filing: 29.06.2023
(51) Int. Cl.: D04H 3/04, B29B 11/16, B32B 5/26

(54) **STITCHED REINFORCING-FIBER BASE MATERIAL, PREFORM MATERIAL, FIBER-REINFORCED COMPOSITE MATERIAL, AND METHODS FOR PRODUCING SAME**

(30) Priority: 30.06.2022 JP 2022105946
(71) Applicant: Teijin Limited, Osaka 530-0005 (JP)
(72) Inventor: NAKAGAWA, Hiroki, Osaka-shi, Osaka 530-0005 (JP); OSAKI, Kohei, Osaka-shi, Osaka 530-0005 (JP)
(74) Representative: Carpmaels & Ransford LLP
(86) International application number: PCT/JP2023/024096
(87) International publication number: WO 2024/005111

(57) **Abstract**

The present invention provides a stitched reinforcing-fiber base material comprising a reinforcing-fiber base material composed of reinforcing fiber and a stitching thread comprising polyethersulfone fiber, the stitched reinforcing-fiber base material being characterized in that the reinforcing-fiber base material is stitched with the stitching thread.

## Description

### Technical Field

The present invention relates to a stitched reinforcing-fiber base material, a preform material, a fiber-reinforced composite material, and methods for producing the same. More specifically, the present invention relates to a stitched reinforcing-fiber base material formed by stitching a reinforcing-fiber base material with a stitching thread, and a preform material and a fiber-reinforced composite material configured by including this stitched reinforcing-fiber base material, and methods for producing the same.

### Background Art

Since a fiber-reinforced composite material is lightweight and has high strength and high rigidity, the fiber-reinforced composite material is used in a wide range of fields including sports and leisure use applications such as fishing rods and golf shafts, industrial use applications such as automobiles and aircraft, and the like. As a method for molding a fiber-reinforced composite material, there is a method for molding a prepreg (intermediate base material) formed into a sheet shape by impregnating a reinforcing-fiber base material with a resin in advance. Examples of other molding methods include a resin transfer molding (RTM) method in which a reinforcing-fiber base material disposed in a mold is impregnated with a liquid resin formulation and then the resin formulation is cured or solidified to obtain a fiber-reinforced composite material.

The fiber-reinforced composite material preferably has isotropy. Therefore, the reinforcing-fiber base material constituting the fiber-reinforced composite material preferably includes a plurality of reinforcing-fiber layers having different fiber axis directions. Examples of the reinforcing-fiber base material including a plurality of reinforcing-fiber layers include woven and knitted fabrics and multiaxial woven fabrics. In the reinforcing-fiber base material including such a woven fabric, crimp occurs in the reinforcing fibers at an intersection between the warp and the weft, so that the linearity of the reinforcing fibers may be deteriorated, and the mechanical properties of the resulting fiber-reinforced composite material may not be sufficiently improved. On the other hand, in the stitched reinforcing-fiber base material, a laminate obtained by laminating a plurality of reinforcing-fiber sheets composed of reinforcing fibers aligned in uni-direction is stitched through the laminate in a thickness direction with a stitching thread to integrate the plurality of reinforcing-fiber sheets, so that crimp of the reinforcing fibers is less likely to occur and the mechanical properties of the resulting fiber-reinforced composite material are easily improved.

However, when a fiber-reinforced composite material is produced using such a stitched reinforcing-fiber base material, microcracks may occur around a stitching thread. The microcracks gradually develop into large cracks, and may deteriorate the mechanical properties of the fiber-reinforced composite material.

In order to control generation of microcracks, various studies have been conducted.

Patent Literature 1 discloses that the formation of microcracks can be controlled in the resulting fiber-reinforced composite material by using a stitching thread having a small count, specifically, 30 dtex or less.

Patent Literature 2 discloses that the formation of microcracks can be controlled in the resulting fiber-reinforced composite material by using a polyetherimide fiber as a stitching thread.

Patent Literature 3 discloses that the formation of microcracks can be controlled in the resulting fiber-reinforced composite material by using a fiber, which is melted in a thermal curing step in a step of producing a fiber-reinforced composite material, as a stitching thread.

Patent Literature 4 discloses a stitched reinforcing-fiber base material formed by stitching a reinforcing-fiber sheet composed of reinforcing fibers with a stitching thread, and discloses that a coefficient of thermal expansion of the stitching thread in a fiber axis direction after heating at 180°C for 2 hours and cooling is -1×10⁻⁶ to 70×10⁻⁶/K.

Patent Literature 5 discloses a stitched reinforcing-fiber base material formed by stitching a reinforcing-fiber sheet compound of reinforcing fibers with a stitching thread, and discloses that a stitching thread to which an organic compound having a polar group is attached is used as the stitching thread.

### Citation List

### Patent Literatures

Patent Literature 1: JP 2012-511450 A
Patent Literature 2: JP 5945110 B2
Patent Literature 3: JP 6630480 B2
Patent Literature 4: WO 2021/172246 A
Patent Literature 5: WO 2021/172247 A

### Summary of Invention

### Technical Problem

An object of the present invention is to provide a stitched reinforcing-fiber base material having high heat resistance, in which formation of microcracks in a fiber-reinforced composite material is controlled and with which a fiber-reinforced composite material having excellent chemical resistance can be produced.

### Solution to Problem

The present inventors have conducted studies to solve the above problems, and as a result, have found that microcracks are generated from interfacial delamination between the stitching thread and the matrix resin. In particular, the present inventors have found that formation of microcracks and development thereof are promoted when a thermal shock is repeatedly applied to a fiber-reinforced composite material.

Therefore, the present inventors have conducted studies on a stitching thread constituting a stitched reinforcing-fiber base material, and have found that the heat resistance of the stitched reinforcing-fiber base material can be enhanced by using a stitching thread including a polyethersulfone fiber as the stitching thread. The present inventors have found that when a stitching thread including a polyethersulfone fiber is used as the stitching thread, the stitching thread is dissolved in the matrix resin or swollen in the matrix resin in a step of producing a fiber-reinforced composite material, so that formation of microcracks in the resulting fiber-reinforced composite material can be controlled, and the chemical resistance thereof can be improved, thereby completing the present invention.

The present invention for achieving the above object is described below.
[1] A stitched reinforcing-fiber base material including: a reinforcing-fiber base material composed of reinforcing fibers; and a stitching thread including a polyethersulfone fiber, wherein the reinforcing-fiber base material is stitched with the stitching thread.
[2] The stitched reinforcing-fiber base material according to [1], wherein the reinforcing-fiber base material is a reinforcing-fiber base material composed of a reinforcing-fiber sheet composed of reinforcing fibers aligned in uni-direction.
[3] The stitched reinforcing-fiber base material according to [2], wherein the reinforcing-fiber base material is a multiaxial base material formed by laminating a plurality of the reinforcing-fiber sheets while mutually changing angles of fiber axes.
[4] The stitched reinforcing-fiber base material according to any one of [1] to [3], wherein the reinforcing-fiber base material is a reinforcing-fiber base material formed by placing a resin material on a surface of the reinforcing-fiber base material and/or between layers composed of reinforcing fibers.
[5] The stitched reinforcing-fiber base material according to any one of [1] to [4], wherein a single yarn fineness of the stitching thread is 1 to 10 dtex/filament.
[6] The stitched reinforcing-fiber base material according to any one of [1] to [5], wherein a total fineness of the stitching thread is 1 to 250 dtex.
[7] The stitched reinforcing-fiber base material according to any one of [1] to [6], wherein the number of filaments of the stitching thread is 1 to 60.
[8] The stitched reinforcing-fiber base material according to any one of [1] to [7], wherein the polyethersulfone fiber is a polyethersulfone fiber composed of polyethersulfone having a glass transition point of 160 to 250°C.
[9] The stitched reinforcing-fiber base material according to any one of [1] to [8], wherein a content ratio of the stitching thread is 0.1 to 30 mass% with respect to a mass of the stitched reinforcing-fiber base material.
[10] A method for producing the stitched reinforcing-fiber base material according to any one of [1] to [9], the method including stitching a reinforcing-fiber base material composed of reinforcing fibers with a stitching thread including a polyethersulfone fiber.
[11] A preform material including:
   the stitched reinforcing-fiber base material according to any one of [1] to [9]; and
   1 to 20 parts by mass of a binder resin with respect to 100 parts by mass of the stitched reinforcing-fiber base material.
[12] A method for producing a preform material, the method including heating, under pressure,
   the stitched reinforcing-fiber base material according to any one of [1] to [9] and
   1 to 20 parts by mass of a binder resin with respect to 100 parts by mass of the stitched reinforcing-fiber base material.
[13] A fiber-reinforced composite material including:
   the stitched reinforcing-fiber base material according to any one of [1] to [9]; and
   a matrix resin impregnated into the stitched reinforcing-fiber base material.
[14] A method for producing a fiber-reinforced composite material, the method including impregnating a matrix resin into the stitched reinforcing-fiber base material according to any one of [1] to [9].
[15] A method for producing a fiber-reinforced composite material, the method including impregnating a matrix resin into the preform material according to [11].

### Advantageous Effects of Invention

The stitched reinforcing-fiber base material of the present invention has high heat resistance.

In the fiber-reinforced composite material produced using the stitched reinforcing-fiber base material of the present invention, formation of microcracks caused by the stitching thread is significantly controlled, so that the mechanical properties of the fiber-reinforced composite material are maintained high.

The fiber-reinforced composite material produced using the stitched reinforcing-fiber base material of the present invention has high chemical resistance.

### Description of Embodiments

Hereinafter, a stitched reinforcing-fiber base material, a preform material, a fiber-reinforced composite material, and methods for producing the same of the present invention will be described.

### 1. Stitched reinforcing-fiber base material

The stitched reinforcing-fiber base material of the present invention includes a reinforcing-fiber base material composed of reinforcing fibers and a stitching thread including a polyethersulfone fiber, and the reinforcing-fiber base material is stitched with the stitching thread. That is, in the stitched reinforcing-fiber base material of the present invention, the reinforcing-fiber base material is stitched through a thickness direction with the stitching thread. Therefore, a state where the reinforcing fibers are temporarily fixed with the stitching thread is maintained until the stitched reinforcing-fiber base material becomes the preform material or the fiber-reinforced composite material.

The manner of stitching of the stitched reinforcing-fiber base material is not particularly limited, and it is preferable that all layers of the reinforcing-fiber base material are stitched and integrated with the stitching thread. The type of stitch is not particularly limited, and a known pattern such as a pillar stitch (single thread chain stitch) can be used. The interval between stitches is not particularly limited, and is suitably about 3 to 60 mm. When the stitch length is less than 3 mm, drapability tends to deteriorate. Microcracks may be easily formed due to the stitching thread. When the stitch length exceeds 60 mm, it may be difficult to temporarily fix the reinforcing-fiber base materials to each other.

The fiber areal weight of the stitched reinforcing-fiber base material of the present invention is preferably 100 to 2000 g/m² and more preferably 200 to 1500 g/m². The thickness of the stitched reinforcing-fiber base material is appropriately selected depending on the use applications of a molded article, and the like, and is generally 0.1 to 2.0 mm and may be 0.5 to 1.5 mm.

### 1-1. Reinforcing-fiber base material

As the reinforcing-fiber base material constituting the stitched reinforcing-fiber base material of the present invention, materials used for normal fiber reinforcement such as carbon fibers, glass fibers, aramid fibers, boron fibers, and metal fibers can be used. Among them, carbon fibers are preferable.

As the reinforcing-fiber base material constituting the stitched reinforcing-fiber base material of the present invention, a reinforcing-fiber sheet obtained by processing continuous fiber bundles of reinforcing fibers into a sheet shape is preferably used, and a reinforcing-fiber sheet composed of reinforcing fibers aligned in uni-direction is more preferably used. By integrating a reinforcing-fiber sheet which is a material having high linearity of reinforcing fibers, crimp of the reinforcing fibers is less likely to occur, and the mechanical properties of the resulting fiber-reinforced composite material are easily improved. In order to enhance the drapability of a sheet when a composite material is molded, the reinforcing fibers constituting the reinforcing-fiber sheet may be partially cut by, for example, making a notch in the sheet, but from the viewpoint of improving the mechanical properties of the resulting composite material, it is preferable that the number of cut parts is small. Even when the reinforcing fibers are cut and used, it is preferable to cut the reinforcing fibers so that the fiber length thereof is maintained at 10 cm or more.

The reinforcing-fiber base material constituting the stitched reinforcing-fiber base material of the present invention is preferably a reinforcing-fiber base material obtained by laminating a plurality of reinforcing-fiber sheets. In particular, the stitched reinforcing-fiber base material of the present invention is a multiaxial base material formed by laminating a plurality of reinforcing-fiber sheets aligned in uni-direction while mutually changing angles of fiber axes, and is preferably formed by stitching with a stitching thread to integrate the plurality of reinforcing-fiber sheets.

As a layup sequence of the reinforcing-fiber sheets, it is preferable to laminate the reinforcing-fiber sheets by changing the fiber axis at an angle appropriately selected from 0°, ±45°, and 90°. These angles mean that the fiber axis directions of the yarns of the reinforcing fibers are 0°, ±45°, and 90°, respectively, with respect to a predetermined direction of the stitched reinforcing-fiber base material. In particular, it is preferable to have a layup sequence of -45°, 0°, +45°, 90°, 90°, +45°, 0°, or - 45°. By performing lamination at such an angle, the isotropy of the resulting fiber-reinforced composite material can be enhanced.

The number of the reinforcing-fiber sheets laminated is not limited, and is preferably about 2 to 8.

Each reinforcing-fiber base material constituting the stitched reinforcing-fiber base material of the present invention is preferably a reinforcing-fiber sheet composed only of yarns of reinforcing fibers aligned in uni-direction. That is, the stitched reinforcing-fiber base material is preferably composed only of reinforcing-fiber sheets in which other yarns (wefts) are not used in directions other than the uni-direction. When the reinforcing fibers are aligned in uni-direction, the linearity of the reinforcing fiber yarns is improved, the mechanical properties of the resulting fiber-reinforced composite material is improved, and generation of a resin-rich portion is controlled after formation of the fiber-reinforced composite material, so that formation of microcracks is easily controlled.

The fiber areal weight of the reinforcing-fiber base material constituting the stitched reinforcing-fiber base material of the present invention is preferably 100 to 2000 g/m² and more preferably 150 to 1500 g/m². The thickness of the reinforcing-fiber base material can be appropriately selected depending on the use applications of a molded article, and the like, and is generally 0.1 to 2 mm and may be 0.5 to 1.5 mm.

### (Resin material)

In the reinforcing-fiber base material constituting the stitched reinforcing-fiber base material of the present invention, a resin material may be disposed on a surface thereof and/or between layers (reinforcing-fiber layers) composed of reinforcing fibers. Examples of the resin material include a binder resin, a resin sheet, and a nonwoven fabric for forming a preform material. It is preferable that a resin material layer composed of a sheet of a thermoplastic resin, particularly a sheet including fibers of a thermoplastic resin, is disposed in at least one space between the reinforcing-fiber layers.

The resin material layer can be laminated together with the reinforcing-fiber layer to form a laminate. In such a laminate, the resin material layer may be disposed between the reinforcing-fiber layers. Preferably, the resin material layer is adjacent to the reinforcing-fiber layer, particularly, disposed on the surface of the reinforcing-fiber layer. When the reinforcing-fiber base material has the resin material layer, the impact resistance of the fiber-reinforced composite material produced from the stitched reinforcing-fiber base material can be improved. The reinforcing-fiber layer and the resin material layer may be bonded to each other by a binder. As for the binder, reference can be made to the description of the preform material described later.

The resin material layer may be disposed on the outermost layer of the stitched reinforcing-fiber base material (that is, for example, it may be disposed on one surface or both surfaces of the main surface of the laminate including a plurality of reinforcing-fiber layers), and/or may be disposed between the plurality of reinforcing-fiber layers constituting the stitched reinforcing-fiber base material.

Examples of fibers of the thermoplastic resin constituting the resin material layer include fibers of a polyolefin resin, a polyamide resin, a polyester resin, a cellulose fiber, a polyethersulfone (PES) resin, and a polyetherimide (PEI) resin. A fiber of a polyamide resin is particularly preferable. Examples of the polyamide (PA) resin include PA6, PA12, PA11, PA6-6, PA6-10, PA6-12, PA10-10, PA6/PA12 copolymer, and PA6-T. From the viewpoint of heat resistance, fibers containing a compound having an aromatic ring structure in a molecular structure, for example, polyethersulfone (PES) or PA6-T are preferable.

The resin material layer is preferably a nonwoven fabric composed of thermoplastic resin fibers.

The thickness of each of the resin material layers is preferably 1 to 60 µm, more preferably 2 to 40 µm, and particularly preferably 3 to 35 µm.

The fiber areal weight of each of the resin material layers is preferably 1 to 15 g/m², more preferably 2 to 10 g/m², and particularly preferably 4 to 6 g/m².

In one preferred embodiment according to the present disclosure, the resin material layer is a nonwoven fabric including thermoplastic resin fibers having an average fiber diameter of 0.5 to 35 µm (hereinafter, also referred to as "small-diameter thermoplastic resin fibers"). The average fiber diameter of the small-diameter thermoplastic resin fibers is preferably 0.5 to 34 µm, more preferably 0.5 to 32 µm, still more preferably 0.5 to 30 µm, and particularly preferably 1 to 25 µm, 1 to 20 µm, 2 to 15 µm, 3 to 12 µm, or 4 to 8 µm in this order.

The average fiber diameter of the thermoplastic resin fibers constituting the resin material layer can be determined by averaging fiber diameter values measured for at least 30 fibers using an optical microscope.

Such a nonwoven fabric can be produced particularly by a melt-blown method. By using the melt-blown method, it is possible to produce a nonwoven fabric including thermoplastic resin fibers having a smaller fiber diameter with the case of using a spun-bond method.

The mass ratio of the small-diameter thermoplastic resin fibers in the resin material layer is preferably 50 mass% or more, more preferably 80 mass% or more, and particularly preferably 90 mass% or more.

The small-diameter thermoplastic resin fiber preferably has a reduced coefficient of variation in fiber diameter, and the coefficient of variation in fiber diameter is more preferably 0.20 or less, and particularly preferably 0.18 or less, 0.16 or less, 0.14 or less, 0.12 or less, or 0.10 or less in this order. Since it is more preferable as the coefficient of variation in fiber diameter is reduced, the lower limit is not particularly limited, and may be, for example, 0.01 or more, 0.02 or more, or 0.05 or more. When the coefficient of variation in fiber diameter is reduced, the proportion of fibers having a relatively large diameter is reduced, so that it is considered that the occurrence of cracks can be particularly well controlled or avoided. By producing a nonwoven fabric by a melt-blown method, the coefficient of variation in fiber diameter of the fibers included in the nonwoven fabric can be particularly favorably reduced.

The coefficient of variation in fiber diameter can be calculated by dividing the average value of fiber diameters from the standard deviation of the fiber diameters measured using an optical microscope.

The softening point of the thermoplastic resin constituting the small-diameter thermoplastic resin fiber is preferably 130 to 230°C and more preferably 160 to 230°C. Here, in the present invention, the softening point refers to a melting point when the resin material is a crystalline resin, and refers to a glass transition point when the resin material is an amorphous resin. The small-diameter thermoplastic resin fiber according to the present invention exhibits favorable microcrack resistance even when it has a relatively high softening point (particularly, a softening point of 185 to 230°C, 190 to 230°C, or 195 to 225°C). In the case of using a small-diameter thermoplastic resin fiber having a relatively high softening point, since the shape of the resin material layer can be maintained in the process of producing the fiber-reinforced composite material, the development of cracks can be effectively controlled, and the impact resistance may be further improved. In the case of using a small-diameter thermoplastic resin fiber having a relatively high softening point, the heat resistance of the resulting fiber-reinforced composite material may be improved, and the mechanical properties of the fiber-reinforced composite material in a high-temperature environment may be further improved.

The softening point of the thermoplastic resin fiber can be measured by a differential scanning calorimeter according to the following conditions based on the standard JIS K7121.
Measurement temperature range: -50°C to 300°C

### 1-2. Stitching thread

The stitching thread constituting the stitched reinforcing-fiber base material of the present invention is a stitching thread including a polyethersulfone fiber. The stitching thread plays a role of connecting reinforcing fibers and/or reinforcing-fiber layers to each other to maintain the integrity of the reinforcing-fiber layers and/or the reinforcing-fiber base materials.

The stitching thread including a polyethersulfone fiber may be a stitching thread including a blended yarn or a combined filament yarn of a polyethersulfone fiber and other fibers in addition to a stitching thread including only polyethersulfone fibers, or may be a core-sheath fiber in which only a core portion or a sheath portion is formed of polyethersulfone. When the stitching thread is a blended yarn, a combined filament yarn, or a core-sheath fiber, the main component thereof is preferably polyethersulfone, more preferably polyethersulfone in an amount of 50 vol% or more, and particularly preferably polyethersulfone in an amount of 80 vol% or more.

In the present invention, the stitching thread may contain a compound having a polar group and/or a polar bond, particularly a compound having at least one selected from the group consisting of a hydroxyl group, an amino group, a phenol group, a lactam group, an epoxy group, an amide bond, and an ester bond. For example, as a material for the stitching thread, a fiber formed from a compound having a polar group and/or a polar bond in a chemical structure can be used. Alternatively, an organic compound having a polar group and/or a polar bond may be attached to the stitching thread.

When the stitching thread has a polar group and/or a polar bond, the affinity with a matrix resin is excellent, so that interfacial delamination between the stitching thread and the matrix resin is controlled, and generation of microcracks at an interface between the stitching thread and the matrix resin can be further controlled.

In particular, in the case of using a thermosetting resin as the matrix resin, when a reactive group such as a hydroxyl group, an amino group, or an epoxy group is used as the polar group, the reactive group contained in the stitching thread reacts with the thermosetting resin to form a covalent bond at an interface between the matrix resin and the stitching thread in the process of producing the fiber-reinforced composite material, so that interfacial adhesion between the stitching thread and the matrix resin may be further improved.

In the stitched reinforcing-fiber base material according to the present disclosure, the amount of the stitching thread may be 1 to 30 g/m², and is more preferably 2 to 15 g/m² and still more preferably 3 to 7 g/m². When the amount of the stitching thread is less than 1 g/m², it may be difficult to temporarily fix the reinforcing-fiber base materials to each other. When the amount of the stitching thread exceeds 30 g/m², drapability may be deteriorated. Microcracks may be easily formed due to the stitching thread.

The polyethersulfone used as the stitching thread is preferably polyethersulfone having a glass transition temperature of 160 to 250°C. The glass transition temperature is more preferably 170 to 240°C and particularly preferably 180 to 230°C. When the glass transition point is lower than 160°C, the heat resistance of the stitched reinforcing-fiber base material tends to be reduced.

The glass transition temperature described herein means a glass transition temperature measured by using polyethersulfone alone.

The polyethersulfone used as the stitching thread preferably has a reactive group having reactivity with an epoxy resin or a functional group forming a hydrogen bond. By using such polyethersulfone, in the step of producing a fiber-reinforced composite material, the microcrack resistance and the chemical resistance of the resulting fiber-reinforced composite material can be further improved by forming a chemical bond with the epoxy resin contained in the matrix resin.

The reactive group having reactivity with an epoxy resin is preferably a hydroxyl group, a carboxylic acid group, an imino group, or an amino group. In particular, it is more preferable to use polyethersulfone having a hydroxyl group at the terminal because the resulting fiber-reinforced composite material is excellent in microcrack resistance and chemical resistance.

The apparent glass transition temperature of polyethersulfone used as the stitching thread in the matrix resin is preferably 160 to 250°C, more preferably 170 to 240°C, and particularly preferably 180 to 230°C. The glass transition temperature is preferably lower than the glass transition temperature measured by the above-described polyethersulfone alone, more preferably lower than that by 5°C, and particularly preferably lower than that by 10°C.

Here, the apparent glass transition temperature of polyethersulfone in the matrix resin means a glass transition temperature as measured in a state where the polyethersulfone fiber used as the stitching thread is present in the matrix resin. Specifically, the glass transition temperature means a glass transition temperature as measured by allowing 3 mg of a matrix resin and 1 mg of a stitching thread to coexist in an aluminum pan of DSC. The matrix resin in this measurement means an epoxy resin which is a main component of the matrix resin formulation in an uncured state. Details of the measurement method will be described later.

The stitching thread in the stitched reinforcing-fiber base material of the present invention is preferably excellent in heat resistance. When the heat resistance of the stitching thread is low, the stitching thread is thermally shrunk in a binder baking step to the stitched reinforcing-fiber base material or a preforming step, and the linearity of the reinforcing fibers included in the stitched reinforcing-fiber base material is impaired. Specifically, the thermal shrinkage ratio of the stitching thread at 120°C as measured by a method described later is preferably 20% or less. When a stitched reinforcing-fiber base material is produced using a stitching thread having a thermal shrinkage ratio of 20% or less, the linearity of the reinforcing fibers is not impaired, and as a result, the mechanical properties of the fiber-reinforced composite material produced using the stitched reinforcing-fiber base material are maintained high.

The total fineness of the stitching thread is preferably 1 to 250 dtex, more preferably 10 to 100 dtex, and particularly preferably 15 to 40 dtex. When the total fineness exceeds 250 dtex, the stitching thread may remain without being swollen or dissolved in the process of producing a fiber-reinforced composite material. Microcracks may be easily generated due to an increase in the size of the stitch holes. When the total fineness is less than 1 dtex, it may be difficult to temporarily fix the reinforcing fibers constituting the stitched reinforcing-fiber base material with the stitching thread.

The single yarn fineness (filament fineness) of the stitching thread is preferably 1 to 10 dtex/filament and more preferably 2 to 6 dtex/filament. When the single yarn fineness exceeds 10 dtex/filament, the stitching thread may remain without being swollen or dissolved in the process of producing a fiber-reinforced composite material. When the single yarn fineness is less than 1 dtex/filament, it may be difficult to temporarily fix the reinforcing fibers constituting the stitched reinforcing-fiber base material with the stitching thread.

The single yarn diameter (filament diameter) of the stitching thread is preferably 10 to 40 µm and more preferably 11 to 30 µm.When the single yarn diameter exceeds 40 µm, the stitching thread may remain without being swollen or dissolved in the process of producing a fiber-reinforced composite material. When the single yarn diameter is less than 10 µm, it may be difficult to temporarily fix the reinforcing fibers constituting the reinforcing-fiber base material with the stitching thread.

The number of filaments of the stitching thread is preferably 1 to 60 and more preferably 4 to 24. When the number of filaments exceeds 60, the stitching thread may remain without being swollen or dissolved in the process of producing a fiber-reinforced composite material. Microcracks may be easily generated due to an increase in the size of the stitch holes.

By using a stitching thread satisfying at least one, more preferably two or more of the conditions of the total fineness, the single yarn fineness, the single yarn diameter, and the number of filaments of the stitching thread, in the fiber-reinforced composite material including a stitched reinforcing-fiber base material, it is possible to particularly control generation of microcracks in the vicinity of an interface between a swollen stitching thread and a matrix resin, or in the vicinity of a boundary between a matrix resin portion in which polyethersulfone derived from a stitching thread is dissolved and a matrix resin portion not containing polyethersulfone derived from a stitching thread.

In the present invention, it is preferable that the stitching thread does not contain an oil agent for fibers, or an oil agent for fibers applied to the stitching thread is removed in advance and then stitching thread is used. Here, the fact that the stitching thread does not contain an oil agent for fibers means that the adhesion amount of the oil agent is 1 mass% or less.

The content ratio of the stitching thread in the stitched reinforcing-fiber base material of the present invention is preferably 0.1 to 30 mass%, more preferably 0.1 to 20 mass%, and particularly preferably 0.1 to 10 mass%, with respect to the mass of the stitched reinforcing-fiber base material.

The stitched reinforcing-fiber base material of the present invention can be produced by stitching a reinforcing-fiber base material composed of reinforcing fibers as described above through a thickness direction with a stitching thread including a polyethersulfone fiber.

### 2. Preform material

When a fiber-reinforced composite material is formed using the stitched reinforcing-fiber base material of the present invention, the stitched reinforcing-fiber base material can be used as it is, but from the viewpoint of handleability and workability, it is preferable to use a preform material obtained by stacking and premolding the stitched reinforcing-fiber base materials.

The preform material can be produced by a method including a step of heating a stitched reinforcing-fiber base material and a binder resin under pressure. For example, production of the preform material is performed by stacking the stitched reinforcing-fiber base material of the present invention or the stitched reinforcing-fiber base material of the present invention and another reinforcing-fiber base material on one surface of a preform production mold until a desired thickness is obtained, and premolding the stitched reinforcing-fiber base material or the stitched reinforcing-fiber base material and another reinforcing-fiber base material by heating under pressure using a heating plate or the like together with a binder resin. As the binder resin, a thermoplastic resin powder may be sprayed on the stitched reinforcing-fiber base material, or a resin sheet such as a nonwoven fabric may be laminated. A binder resin may be attached to the stitched reinforcing-fiber base material in advance. Furthermore, a resin sheet such as a nonwoven fabric may be stacked between reinforcing-fiber layers constituting the stitched reinforcing-fiber base material. The binder resin is melted by heating, and the stitched reinforcing-fiber base materials of the present invention or the stitched reinforcing-fiber base material of the present invention and another reinforcing-fiber sheet are molded following a mold to obtain a preform material maintaining the shape of the mold.

The resin material used as the binder resin is not particularly limited, and a thermosetting resin such as an epoxy resin or a vinyl ester resin, a thermoplastic resin such as polyamide or polyethersulfone, and a mixture thereof can be appropriately used. These resins may be used by spraying a powder thereof, or may be formed into a resin sheet, a nonwoven fabric composed of resin fibers, or the like and laminated on the stitched reinforcing-fiber base material of the present invention. Alternatively, these resins may be attached to each yarn constituting the stitched reinforcing-fiber base material of the present invention in advance, or a resin sheet, a nonwoven fabric composed of resin fibers, or the like may be disposed between reinforcing-fiber layers constituting the stitched reinforcing-fiber base material of the present invention. A stitched reinforcing-fiber base material in which the resin material layer as described above is disposed between layers composed of reinforcing fibers may be used.

The amount of the binder resin constituting the preform material is preferably 1 to 20 parts by mass and more preferably 5 to 10 parts by mass with respect to 100 parts by mass of the stitched reinforcing-fiber base material of the present invention. The thickness of the preform material varies depending on the intended use, but is preferably 1 to 40 mm.

The preform material can be formed into a fiber-reinforced composite material by a known molding method such as an RTM method or an RFI method. The preform material produced by the above-described method maintains its three-dimensional shape even after premolding. Thus, it is possible to move the preform material from a preform production mold to a production mold for a fiber-reinforced composite material without losing its shape. Therefore, it is not necessary to directly laminate the preform material on a molding die for producing a fiber-reinforced composite material, the occupation time of the molding die can be reduced, and the productivity of the fiber-reinforced composite material is improved.

### 3. Fiber-reinforced composite material (FRP)

The fiber-reinforced composite material of the present invention includes the stitched reinforcing-fiber base material of the present invention and a matrix resin.

The method for producing a fiber-reinforced composite material according to the present disclosure can include a step of impregnating a matrix resin into the stitched reinforcing-fiber base material according to the present disclosure. For example, a fiber-reinforced composite material can be obtained by impregnating a stitched reinforcing-fiber base material with a liquid resin (that is, for example, an uncured curable resin or a thermoplastic resin in a molten state), and curing or solidifying the resin to form a composite.

The method for producing a fiber-reinforced composite material is not particularly limited, a prepreg in which a stitched reinforcing-fiber base material is impregnated with a matrix resin in advance may be molded, or a stitched reinforcing-fiber base material and a matrix resin may be composited simultaneously with molding by a resin transfer molding method (RTM method), a resin film infusion molding method (RFI method), or the like. Preferably, the stitched reinforcing-fiber base material of the present invention is used in a molding method by an RTM method or an RFI method.

### (Matrix resin)

As the matrix resin that can be used in the present invention, a thermosetting resin or a thermoplastic resin is used. The coefficient of thermal expansion (CTEm) of the matrix resin is preferably 40×10⁻⁶ to 70×10⁻⁶/K. The matrix resin may be a mixture of one or two or more kinds of resins, and may contain a colorant, a filler, various additives, and the like. When the matrix resin includes a thermosetting resin, the content of the thermosetting resin may be 30 mass% or more, 40 mass% or more, or 50 mass% or more, with respect to the matrix resin. The content of the thermosetting resin may be 100 mass% or less, 90 mass% or less, 80 mass% or less, or 70 mass% or less. In particular, the content is preferably 30 to 100 mass%, 40 to 90 mass%, or 50 to 80 mass% in this order.

Examples of the thermosetting resin include an epoxy resin; an unsaturated polyester resin; a phenol resin; a melamine resin; a polyurethane resin; a silicone resin; a maleimide resin; a vinyl ester resin; a cyanate ester resin; a resin obtained by prepolymerizing a maleimide resin and a cyanate ester resin; a urethane acrylate resin; a phenoxy resin; an alkyd resin; a urethane resin; a bismaleimide resin; a polyimide resin and a polyisoimide resin having an acetylene terminal; and a polyimide resin having a nadic acid terminal. These can also be used singly or as a mixture of two or more kinds thereof. Among them, an epoxy resin, a vinyl ester resin, a bismaleimide resin, and a polyimide resin having excellent heat resistance, elastic modulus, and chemical resistance are particularly preferable.

### (Epoxy resin)

The epoxy resin is not particularly limited, and examples thereof include tetrafunctional glycidyl amine-type epoxy resins such as tetraglycidyl-4,4'-diaminodiphenylmethane, tetraglycidyl-4,4'-diaminodiphenylsulfone, tetraglycidyl-3,3'-diaminodiphenylsulfone, tetraglycidyl-4,4'-diaminodiphenyl ether, and tetraglycidyl-3,4'-diaminodiphenyl ether; trifunctional epoxy resins such as triglycidyl-m-aminophenol, triglycidyl-p-aminophenol, and triglycidyl isocyanurate; and bifunctional epoxy resins such as diglycidyl aniline and derivatives thereof such as diglycidyl-o-toluidine, diglycidyl-m-toluidine, diglycidyl-p-toluidine, diglycidyl-xylidine, diglycidyl-mesidine, diglycidyl-anisidine, and diglycidyl-phenoxyaniline, or diglycidyl-diglycidyl-naphthylamine and derivatives thereof, bisphenol A diglycidyl ether, bisphenol F diglycidyl ether, bisphenol S diglycidyl ether, resorcinol diglycidyl ether, and 1,6-naphthalenediol diglycidyl ether. These epoxy resins may be used singly, or a plurality of epoxy resins may be mixed and used.

### (Curing agent)

As the thermosetting resin that can be used in the present invention, a known curing agent can be used. In particular, it is preferable to use an amine-based curing agent from the viewpoint of the mechanical properties of a cured product. The thermosetting resin that can be used in the present invention may or may not contain the curing agent in advance. A thermosetting resin not containing a curing agent is in a state of being mixable with the curing agent before or during curing.

Examples of the amine-based curing agent include latent curing agents such as dicyandiamide, various isomers of an aliphatic polyamine-based curing agent and an aromatic polyamine-based curing agent, aminobenzoic acid ester, and an acid anhydride. Dicyandiamide is preferable because it is excellent in storage stability of the stitched reinforcing-fiber base material impregnated with the matrix resin.

Aliphatic polyamines are preferable because they have high reactivity and can undergo a curing reaction at a low temperature. Examples of the aliphatic polyamines include 4,4'-diaminodicyclohexylmethane, isophoronediamine, and m-xylylenediamine.

Aromatic polyamines are preferable because they are excellent in heat resistance and various mechanical properties. Examples of the aromatic polyamine include diaminodiphenylsulfone, diaminodiphenylmethane, and a toluenediamine derivative. Aromatic diamine compounds, such as 4,4'-diaminodiphenylsulfone, 3,3'-diaminodiphenylsulfone, and 4,4'-diaminodiphenylmethane, and derivatives having non-reactive substituents thereof are particularly preferable from the viewpoint of providing a cured product having favorable heat resistance. Examples of the non-reactive substituent include alkyl groups such as methyl, ethyl, and isopropyl, aromatic groups such as phenyl, an alkoxyl group, an aralkyl group, and halogen groups such as chlorine and bromine.

As the aminobenzoic acid ester, trimethylene glycol di-p-aminobenzoate or neopentyl glycol di-p-aminobenzoate is preferably used. A composite material cured using these compounds is inferior in heat resistance to various isomers of diaminodiphenylsulfone, but is excellent in tensile elongation.

Examples of the acid anhydride include 1,2,3,6-tetrahydrophthalic anhydride, hexahydrophthalic anhydride, and 4-methylhexahydrophthalic anhydride. In the case of using these curing agents, a cured product having a long pot life of the uncured resin formulation and relatively well-balanced electrical properties, chemical properties, mechanical properties and the like is obtained. Therefore, the type of curing agent to be used is appropriately selected according to the use applications of the composite material.

When the thermosetting resin is used in an RTM molding method, it is preferable to contain a curing agent composed of an aromatic polyamine, i.e., a curing agent composed of an aromatic polyamine having at least one substituent of an aliphatic substituent, an aromatic substituent, and a halogen atom at the ortho position with respect to an amino group.

The curing agent suitable for an RTM molding method may be a polyamine having the above-described structure, and specific examples thereof include 4,4'-diaminodiphenylmethane and a derivative thereof, and phenylenediamine and a derivative thereof.

Examples of the derivative of 4,4'-diaminodiphenylmethane include hindered amine-based compounds such as 4,4'-methylenebis(2,6-diethylaniline), 4,4'-methylenebis(2-ethyl-6-methylaniline), and 4,4'-methylenebis(2-isopropyl-6-methylaniline). These curing agents can improve the storage stability of the uncured thermosetting resin and the pot life during RTM molding, and can improve the water absorption characteristics of the resin cured product.

Examples of the derivative of phenylenediamine include 2,4-diaminotoluene, 2,6-diaminotoluene, 2,4,6-trimethyl-1,3-phenylenediamine, m-phenylenediamine, diethyltoluenediamine, and dimethylthiotoluenediamine. These curing agents can improve the cure speed of the thermosetting resin and viscosity characteristics during RTM molding, and can improve the mechanical properties and heat resistance of the resin cured product.

The total amount of the curing agent contained in the thermosetting resin that can be used in the present invention is an amount suitable for curing all the thermosetting resins (particularly, all the epoxy compounds) blended in the matrix resin, and is appropriately adjusted according to the types of the thermosetting resin (particularly, the epoxy compound) and the curing agent to be used.

Specifically, for example, the ratio between the number of epoxy groups contained in the epoxy compound in the matrix resin and the number of active hydrogens contained in the curing agent is preferably 0.7 to 1.3, more preferably 0.8 to 1.2, and particularly preferably 0.9 to 1.1. When the ratio is less than 0.7 or more than 1.3, the molar balance between the epoxy group and the active hydrogen is lost, the crosslinking density of the resulting resin cured product may be insufficient, and the mechanical properties such as heat resistance, elastic modulus, and fracture toughness may be deteriorated.

When the matrix resin includes a thermosetting resin, the matrix resin may contain a colorant, a filler, various additives, and the like in addition to the curing agent and the curing accelerator. In order to improve the impact resistance of the matrix resin, it is preferable to contain a thermoplastic resin component and resin particles.

### (Thermoplastic resin component)

The matrix resin may further include a thermoplastic resin in addition to the thermosetting resin. The thermoplastic resin may be present on the stitched reinforcing-fiber base material side as an interlayer resin such as the nonwoven fabric described above, and may be incorporated into the matrix resin when the stitched reinforcing-fiber base material and the matrix resin are composited. Examples of the thermoplastic resin include an epoxy resin-soluble thermoplastic resin and an epoxy resin-insoluble thermoplastic resin.

The epoxy resin-soluble thermoplastic resin adjusts the viscosity of the matrix resin and improves the impact resistance of the fiber-reinforced composite material. The epoxy resin-soluble thermoplastic resin is a thermoplastic resin that can be partially or entirely dissolved in an epoxy resin at a temperature at which the fiber-reinforced composite material is molded.

Here, dissolving in the epoxy resin means that, when 10 parts by mass of a thermoplastic resin having an average particle diameter of 20 to 50 µm is mixed with 100 parts by mass of the epoxy resin and stirred at 190°C for 1 hour, the particles disappear, or the size (particle diameter) of the particles changes by 10% or more.

Meanwhile, the epoxy resin-insoluble thermoplastic resin refers to a thermoplastic resin that is not substantially dissolved in an epoxy resin at a temperature at which the fiber-reinforced composite material is molded. That is, the epoxy resin-insoluble thermoplastic resin refers to a thermoplastic resin in which the size of particles does not change by 10% or more when 10 parts by mass of a thermoplastic resin having an average particle diameter of 20 to 50 µm is mixed with 100 parts by mass of the epoxy resin and stirred at 190°C for 1 hour. In general, a temperature at which the fiber-reinforced composite material is molded is 100 to 190°C. The particle diameter is visually measured by a microscope, and the average particle diameter means an average value of particle diameters of 100 randomly selected particles.

When the epoxy resin-soluble thermoplastic resin is not completely dissolved, the epoxy resin-soluble thermoplastic resin is dissolved in the epoxy resin by being heated in the process of curing the epoxy resin, and the viscosity of the matrix resin can be increased. This makes it possible to prevent the flow of the matrix resin (phenomenon in which the matrix resin flows out from the inside of the reinforcing-fiber base material impregnated with the matrix resin) caused by a decrease in viscosity in the curing process.

The epoxy resin-soluble thermoplastic resin is preferably a resin that is dissolved in the epoxy resin in an amount of 80 mass% or more at 190°C.

Specific examples of the epoxy resin-soluble thermoplastic resin include polyethersulfone, polysulfone, polyetherimide, and polycarbonate. These may be used singly or in combination of two or more kinds thereof. The epoxy resin-soluble thermoplastic resin contained in the epoxy resin formulation is particularly preferably polyethersulfone or polysulfone having a weight average molecular weight (Mw) in a range of 8000 to 100000 as measured by gel permeation chromatography. When the weight average molecular weight (Mw) is less than 8000, the impact resistance of the resulting fiber-reinforced composite material becomes insufficient, and when the weight average molecular weight (Mw) is more than 100000, the viscosity becomes significantly high and the handleability may be significantly deteriorated.

The molecular weight distribution of the epoxy resin-soluble thermoplastic resin is preferably uniform. Specifically, the polydispersity (Mw/Mn), which is the ratio of the weight average molecular weight (Mw) and the number average molecular weight (Mn), is preferably in a range of 1 to 10 and more preferably in a range of 1.1 to 5.

The epoxy resin-soluble thermoplastic resin preferably has a reactive group having reactivity with an epoxy resin or a functional group forming a hydrogen bond. Such an epoxy resin-soluble thermoplastic resin can improve the dissolution stability of the epoxy resin during the curing process. Toughness, chemical resistance, heat resistance, and wet heat resistance can be imparted to the fiber-reinforced composite material obtained after curing.

The reactive group having reactivity with an epoxy resin is preferably a hydroxyl group, a carboxylic acid group, an imino group, or an amino group. When polyethersulfone having a hydroxyl group terminal is used, the impact resistance, fracture toughness, and solvent resistance of the resulting fiber-reinforced composite material are particularly excellent, which is more preferable.

The content of the epoxy resin-soluble thermoplastic resin included in the matrix resin is appropriately adjusted according to the viscosity. From the viewpoint of the processability of the prepreg and/or the fiber-reinforced composite material, the content of the epoxy resin-soluble thermoplastic resin is preferably 5 to 90 parts by mass, more preferably 5 to 40 parts by mass, and particularly preferably 15 to 35 parts by mass, with respect to 100 parts by mass of the epoxy resin included in the matrix resin. When the content is less than 5 parts by mass, the impact resistance of the resulting fiber-reinforced composite material may become insufficient, which is not preferable. On the other hand, when the content of the epoxy resin-soluble thermoplastic resin exceeds 90 parts by mass, the viscosity becomes significantly high, and the handleability of the stitched reinforcing-fiber base material impregnated with the matrix resin matrix resin be significantly deteriorated, which is not preferable.

The epoxy resin-soluble thermoplastic resin preferably contains a reactive aromatic oligomer having a terminal amine group (hereinafter, also simply referred to as "aromatic oligomer").

The matrix resin is increased in molecular weight by a curing reaction between the epoxy resin and the curing agent during heat curing. The aromatic oligomer dissolved in the matrix resin causes the reaction-induced phase separation as two phase regions expand due to an increase in molecular weight. By this phase separation, a two-phase structure of a resin in which the cured epoxy resin and the aromatic oligomer are co-continuous is formed in the matrix resin. Since the aromatic oligomer has a terminal amine group, a reaction with an epoxy resin also occurs. Since the phases in the co-continuous two-phase structure are firmly bonded to each other, the solvent resistance is improved.

The co-continuous structure absorbs external impact on the fiber-reinforced composite material to control crack propagation. As a result, a fiber-reinforced composite material produced using a reactive aromatic oligomer having a terminal amine group has high impact resistance and fracture toughness.

As the aromatic oligomer, a known polysulfone having a terminal amine group or a known polyethersulfone having a terminal amine group can be used. The terminal amine group is preferably a terminal primary amine (-NH₂) group.

The aromatic oligomer blended in the matrix resin preferably has a weight average molecular weight of 8000 to 40000 as measured by gel permeation chromatography. When the weight average molecular weight is less than 8000, the effect of improving the toughness of the matrix resin is low, which is not preferable. On the other hand, when the weight average molecular weight exceeds 40000, the viscosity of the matrix resin becomes too high, and processing problems such as difficulty in impregnating the resin formulation into the reinforcing-fiber layer easily occur, which is not preferable.

As the aromatic oligomer, a commercially available product such as "Virantage DAMS VW-30500 RP (registered trademark)" (manufactured by Solvay Specialty Polymers) can be preferably used.

The form of the epoxy resin-soluble thermoplastic resin is preferably particulate. The particulate epoxy resin-soluble thermoplastic resin can be uniformly blended in the matrix resin. The moldability of the resulting prepreg and/or fiber-reinforced composite material is high.

The average particle diameter of the particulate epoxy resin-soluble thermoplastic resin is preferably 1 to 50 µm and more preferably 3 to 30 µm. When the average particle diameter is less than 1 µm, the viscosity of the matrix resin is significantly increased, so that it may be difficult to add a sufficient amount of the epoxy resin-soluble thermoplastic resin to the matrix resin, which is not preferable. On the other hand, when the average particle diameter exceeds 50 µm, it may be difficult to obtain a sheet having a uniform thickness when the matrix resin is processed into a sheet shape, and the dissolution rate in the epoxy resin is reduced, so that the resulting fiber-reinforced composite material becomes uneven, which is not preferable.

When the matrix resin includes a thermosetting resin, the matrix resin may include an epoxy resin-insoluble thermoplastic resin in addition to the epoxy resin-soluble thermoplastic resin. The epoxy resin-insoluble thermoplastic resin and some of the epoxy resin-soluble thermoplastic resin (the epoxy resin-soluble thermoplastic resin remaining in the matrix resin after curing without being dissolved) are in a state where the particles thereof are dispersed in the matrix resin of the fiber-reinforced composite material (hereinafter, the dispersed particles are also referred to as "interlayer particles"). The interlayer particles control propagation of an impact applied to the fiber-reinforced composite material. As a result, the impact resistance of the resulting fiber-reinforced composite material is improved.

Examples of the epoxy resin-insoluble thermoplastic resin include polyamide, polyacetal, polyphenylene oxide, polyphenylene sulfide, polyester, polyamideimide, polyimide, polyether ketone, polyether ether ketone, polyethylene naphthalate, polyether nitrile, and polybenzimidazole. Among these, polyamide, polyamideimide, and polyimide are preferable because they have high toughness and high heat resistance.

Polyamide and polyimide are particularly excellent in the effect of improving the toughness of the fiber-reinforced composite material. These may be used singly or in combination of two or more kinds thereof. Copolymers thereof can also be used.

In particular, by using a polyamide such as an amorphous polyimide, nylon 6 (registered trademark) (a polyamide obtained by a ring-opening polycondensation reaction of caprolactam), nylon 11 (a polyamide obtained by a ring-opening polycondensation reaction of undecane lactam), nylon 12 (a polyamide obtained by a ring-opening polycondensation reaction of lauryl lactam), nylon 1010 (a polyamide obtained by a copolymerization reaction of sebacic acid and 1,10-decanediamine), or amorphous nylon (nylon also called transparent nylon, in which crystallization of the polymer does not occur or the crystallization rate of the polymer is extremely slow), the heat resistance of the resulting fiber-reinforced composite material can be particularly improved.

The content of the epoxy resin-insoluble thermoplastic resin in the matrix resin that can be used in the present invention is appropriately adjusted according to the viscosity of the matrix resin. From the viewpoint of the processability of the prepreg and/or the fiber-reinforced composite material, the content is preferably 5 to 50 parts by mass, more preferably 10 to 45 parts by mass, and particularly preferably 20 to 40 parts by mass, with respect to 100 parts by mass of the epoxy resin included in the matrix resin. When the content is less than 5 parts by mass, the impact resistance of the resulting fiber-reinforced composite material may become insufficient, which is not preferable. On the other hand, when the content exceeds 50 parts by mass, the impregnation property of the matrix resin, the drape property of the stitched reinforcing-fiber base material impregnated with the matrix resin, and the like may be deteriorated, which is not preferable.

The average particle diameter and form of the epoxy resin-insoluble thermoplastic resin are the same as those of the epoxy resin-soluble thermoplastic resin.

### (Resin particles)

When the matrix resin that can be used in the present invention includes a thermosetting resin, the matrix resin may further contain resin particles. The resin particles are present in a state of being dispersed without being dissolved in the thermosetting resin (particularly, the epoxy resin), and are also present in a resin cured product obtained after curing the thermosetting resin (particularly, the epoxy resin) in a state of being dispersed in the resin cured product. When the resin cured product is used as a sea component, the resin particles are present as an island component in the resin cured product.

When resin particles are contained, high fracture toughness and impact resistance can be obtained in the resin cured product or the fiber-reinforced composite material, which is preferable. When resin particles are contained in the matrix resin, the microcrack resistance may become particularly favorable.

As the resin particles, for example, thermoplastic resin particles, thermosetting resin particles, and rubber particles can be used, and rubber particles are preferably used. Examples of the rubber particles include silicone rubber, butadiene rubber, styrene butadiene rubber, and methyl methacrylate-butadiene-styrene rubber. The resin particles may be used singly or in combination of two or more kinds thereof.

Examples of commercially available products of rubber particles used as resin particles include MX-153 (a single dispersion of 33 mass% butadiene rubber in a bisphenol A-type epoxy resin, manufactured by KANEKA CORPORATION), MX-257 (a single dispersion of 37 mass% butadiene rubber in a bisphenol A-type epoxy resin, manufactured by KANEKA CORPORATION), MX-154 (a single dispersion of 40 mass% butadiene rubber in a bisphenol A-type epoxy resin, manufactured by KANEKA CORPORATION), MX-960 (a single dispersion of 25 mass% silicone rubber in a bisphenol A-type epoxy resin, manufactured by KANEKA CORPORATION), MX-136 (a single dispersion of 25 mass% butadiene rubber in a bisphenol F-type epoxy resin, manufactured by KANEKA CORPORATION), MX-965 (a single dispersion of 25 mass% silicone rubber in a bisphenol F-type epoxy resin, manufactured by KANEKA CORPORATION), MX-217 (a single dispersion of 25 mass% butadiene rubber in a phenol novolac-type epoxy resin, manufactured by KANEKA CORPORATION), MX-227M75 (a single dispersion of 25 mass% styrene-butadiene rubber in a bisphenol A novolac-type epoxy resin, manufactured by KANEKA CORPORATION), MX-334M75 (a single dispersion of 25 mass% styrene-butadiene rubber in a brominated epoxy resin, manufactured by KANEKA CORPORATION), MX-414 (also referred to as MX416, MX-EXP434VL) (a single dispersion of 25 mass% butadiene rubber in a tetrafunctional glycidyl amine-type epoxy resin, manufactured by KANEKA CORPORATION), and MX-451 (a single dispersion of 25 mass% styrene-butadiene rubber in a trifunctional glycidyl amine-type epoxy resin, manufactured by KANEKA CORPORATION).

The average particle diameter of the resin particles is preferably 1.0 µm or less, more preferably 0.5 µm or less, and particularly preferably 0.3 µm or less. The average particle diameter is preferably 0.03 µm or more, more preferably 0.05 µm or more, and particularly preferably 0.08 µm or more. When the average particle diameter is 1.0 µm or less, in a step of impregnating a fiber-reinforced base material with a matrix resin, the resin particles are not filtered on the surface of the fiber-reinforced base material, so that the inside of a reinforcing-fiber layer is easily impregnated, whereby poor impregnation of the resin can be prevented, and a fiber-reinforced composite material having excellent mechanical properties can be obtained, which is preferable.

The average particle diameter of the resin particles can be determined by observing a cross-section of the fiber-reinforced composite material with a scanning electron microscope or a transmission electron microscope, measuring the diameters of 50 resin particles, and averaging the diameters. The observation can be performed at a magnification of 25000. When the resin particles are not perfectly circular, that is, when the resin particles are elliptical or the like, the maximum diameter of the resin particles is defined as the particle diameter of the resin particles.

The content of the resin particles is preferably 0.1 to 30 parts by mass, more preferably 0.5 to 20 parts by mass, and particularly preferably 1 to 10 parts by mass, with respect to 100 parts by mass of the total of the thermosetting resin (particularly, 100 parts by mass of the total of the epoxy resin). When the content is set to **0.1** parts by mass or more, the fracture toughness and impact resistance of the resin cured product and the fiber composite material can be sufficiently improved, which is preferable. On the other hand, when the content is set to 30 parts by mass or less, the viscosity of the matrix resin can be lowered, and the impregnation property into the stitched reinforcing-fiber base material can be enhanced, which is preferable.

The resin particles can also be used as a masterbatch in which the resin particles are dispersed in a thermosetting resin (particularly, an epoxy resin) at a high concentration. In this case, it is easy to highly disperse the resin particles in a thermosetting resin (particularly, an epoxy resin).

In one embodiment according to the present disclosure, the matrix resin constituting the fiber-reinforced composite material contains 0.1 to 30 parts by mass of resin particles with respect to 100 parts by mass of the thermosetting resin, and the resin particles have an average particle diameter of 1.0 µm or less.

### (RTM method)

The fiber-reinforced composite material of the present invention is preferably obtained by a resin transfer molding method (RTM method) from the viewpoint of efficiently obtaining a fiber-reinforced composite material having a complex shape. The RTM method includes a step of impregnating a stitched reinforcing-fiber base material disposed in a mold with a liquid thermosetting resin before curing or a molten thermoplastic resin as a matrix resin, and a step of curing or solidifying the matrix resin to obtain a fiber-reinforced composite material.

In the present invention, as the mold used in the RTM method, a closed mold made of a rigid material may be used, and an open mold made of a rigid material and a flexible film (bag) may also be used. In the latter case, the stitched reinforcing-fiber base material can be placed between the open mold made of a rigid material and the flexible film. As the rigid material, various existing materials including a metal such as steel or aluminum, fiber-reinforced plastic (FRP), wood, plaster, and the like are used. As a material for the flexible film, polyamide, polyimide, polyester, a fluororesin, a silicone resin, or the like is used.

In the RTM method, in the case of using a closed mold made of a rigid material, it is usually performed that the mold is clamped by pressurization, and the matrix resin is injected by pressurization. At this time, it is also possible to provide a suction port separately from an injection port and to connect the suction port to a vacuum pump for suction. It is also possible to perform suction and inject the matrix resin only at atmospheric pressure without using a special pressurization means. This method can be suitably used because a large member can be produced by providing a plurality of suction ports.

In the RTM method, in the case of using an open mold made of a rigid material and a flexible film, suction is performed, and the matrix resin may be infused only at atmospheric pressure without using a special pressurization means. In order to realize favorable impregnation by infusion only at atmospheric pressure, it is effective to use a resin diffusion medium. It is preferred to apply a gel coat to the surface of the rigid material prior to installation of the stitched reinforcing-fiber base material.

In the RTM method, when a thermosetting resin is used as the matrix resin, the matrix resin is impregnated into the stitched reinforcing-fiber base material, and then heat curing is performed. The mold temperature during heat curing is usually selected to be higher than the mold temperature during the injection of the thermosetting resin. The mold temperature during heat curing is preferably 80 to 200°C. The time for heat curing is preferably 1 minute to 20 hours. After the heat curing is completed, the mold is removed to take out the fiber-reinforced composite material. Thereafter, the obtained fiber-reinforced composite material may be heated at a higher temperature and then curing may be performed. The temperature of post-curing is preferably 150 to 200°C and the time for post-curing is preferably 1 minute to 4 hours.

When an epoxy resin is used as the matrix resin, the impregnation pressure when the stitched reinforcing-fiber base material is impregnated with the epoxy resin by the RTM method is appropriately determined in consideration of the viscosity of the resin, the resin flow, and the like. A specific impregnation pressure is 0.001 to 10 MPa and preferably 0.01 to 1 MPa. When a fiber-reinforced composite material is obtained using the RTM method, the viscosity of the epoxy resin at 100°C is preferably less than 5000 mPa·s and more preferably 1 to 1000 mPa·s.

The amount of the matrix resin is preferably 20 to 60 parts by mass and more preferably 30 to 40 parts by mass with respect to 100 parts by mass of the stitched reinforcing-fiber base material.

In the present molding method, the viscosity of the matrix resin is preferably 0.01 to 1 Pa·s at an injection temperature. It is preferable that a resin to be injected is treated in advance by a method such as heating to adjust the viscosity at the time of injection to the above-described range.

Since the fiber-reinforced composite material of the present invention is produced using the stitched reinforcing-fiber base material of the present invention, the crack density is reduced. From the viewpoint of the durability of the fiber-reinforced composite material, specifically, the crack density after a thermal shock test as measured by a method described later is preferably 0.30 cracks/(cm·ply) or less, more preferably 0.20 cracks/(cm·ply) or less, and still more preferably 0.10 cracks/(cm·ply) or less. In a case where a large number of cracks having a crack density of more than 0.30 cracks/(cm·ply) are generated in the fiber-reinforced composite material, when additional stress is applied to the fiber-reinforced composite material, the cracks grow, and there is a concern that the mechanical properties of the fiber-reinforced composite material may be deteriorated by the grown cracks.

### Examples

Hereinafter, the present invention will be described more specifically with reference to Examples, but the present invention is not limited to Examples. Components and evaluation methods used in Present Examples and Comparative Examples will be described below.

### <Evaluation method>

The evaluations performed in Examples and Comparative Examples are as follows.

### (Melting point of stitching thread and melting point of stitching thread in matrix resin)

The melting point of the thermoplastic resin fiber constituting the stitching thread was measured according to JIS K7121.

3 mg of a stitching thread was weighed in an aluminum pan to prepare a sample. The temperature at the top of the melt endothermic peak was measured as the melting point of the stitching thread by DSC (DSC3500 Sirius manufactured by NETZSCH). When there were a plurality of melt endothermic peaks, a value measured on the lowest temperature side was taken as the melting point of the stitching thread.

The melting point of the stitching thread in the matrix resin was measured in the same manner as in the measurement of the melting point of the stitching thread alone, except that 3 mg of tetraglycidyl-4,4'-diaminodiphenylmethane used as a main component of the matrix resin formulation and 1 mg of a stitching thread were weighed in an aluminum pan to prepare a sample.

### [Measurement conditions]

### Measurement temperature range: -50 to 300°C

### (Glass transition point of stitching thread and glass transition point of stitching thread in matrix resin)

The glass transition point of the thermoplastic resin fiber constituting the stitching thread was measured according to JIS K7121.

3 mg of a stitching thread was weighed in an aluminum pan to prepare a sample. The midpoint glass transition temperature measured by DSC (DSC3500 Sirius manufactured by NETZSCH) was taken as the glass transition point of the stitching thread.

The glass transition point of the stitching thread in the matrix resin was measured in the same manner as in the measurement of the glass transition point of the stitching thread alone, except that 3 mg of tetraglycidyl-4,4'-diaminodiphenylmethane used as a main component of the matrix resin formulation and 1 mg of a stitching thread were weighed in an aluminum pan to prepare a sample.

### [Measurement conditions]

### Measurement temperature range: -50°C to 300°C

### (Average fiber diameter of thermoplastic resin fiber)

The average fiber diameter of the thermoplastic resin fibers constituting the nonwoven fabric as the resin material layer was measured by averaging fiber diameter values measured for 30 fibers using an optical microscope. The observation was performed using VHX-5000 manufactured by KEYENCE CORPORATION as a microscope at a magnification of 300.

### (Total fineness, single yarn fineness, and number of filaments of stitching thread)

The stitching thread was wound by 100 m using a sizing reel, and the mass thereof was measured. The obtained mass was multiplied by 100 to calculate the mass per 10000 m, and the value was taken as the total fineness (dtex). The number of filaments of the stitching thread was measured by observation using an optical microscope. The single yarn fineness of the stitching thread was calculated by dividing the total fineness by the number of filaments.

### (Thermal shock test)

The fiber-reinforced composite material was subjected to 1000 times of cooling/heating cycles using a thermal shock tester (TSA-73EH-W manufactured by ESPEC CORPORATION). One cycle of cooling/heating cycle was set to consist of a flat range at -55°C for 15 minutes, followed by ramp range reaching 70°C for 15 minutes, a flat range at 70°C for 15 minutes, and then a ramp range going back to -55°C for 15 minutes.

### (Crack density)

The number of cracks in the cross-section inside the test piece of the fiber-reinforced composite material after the thermal shock test was measured by microscopic observation. The observation was performed using VHX-5000 manufactured by KEYENCE CORPORATION as a microscope at a magnification of 200. Specifically, the test piece (width 80 mm × length 50 mm × thickness 5 mm) after the thermal shock test was cut into four equal parts of width 40 mm × length 25 mm, the cut surface in the thickness direction was mirror-polished, and each of the cross-section on the long side and the cross-section on the short side was used as an observation surface. The observation range of the microcracks in microscopic observation was set to 50 mm² or more, and a value of the crack density was calculated by dividing the number of measured cracks by the number of layers laminated (ply = the number of plies) and the width of the observation surface (L (cm)). The unit of the crack density is crack/(cm·ply). The crack density values obtained from the observation surfaces of the cross-section on the long side and the cross-section on the short side were averaged to obtain a final crack density.

### (Compression strength after impact (CAI compression strength))

A carbon fiber-reinforced composite material (CFRP) was cut into a size of width 101.6 mm × length 152.4 mm to obtain a test piece for a compression after impact (CAI) test. Using this test piece, an impact of 30.5 J was applied according to SACMA SRM 2R-94 to cause damage, and then the compression strength after impact (unit: MPa) was measured. The crosshead speed of a test piece compression tester was set to 1 mm/min, and measurement was performed on five test pieces.

### (Evaluation of heat resistance of stitched reinforcing-fiber multiaxial base material (NCF base material))

The stitching thread placed on a glass slide was heated by a hot plate on a microscope, and the amount of thermal shrinkage of the stitching thread when the sample temperature reached 120°C was measured. The thermal shrinkage ratio of the stitching thread was calculated from the length of the stitching thread before heating and the length of the stitching thread during heating. The observation was performed using VHX-5000 manufactured by KEYENCE CORPORATION as a microscope. A case where the thermal shrinkage ratio was 20% or less was evaluated as "∘", and a case where the thermal shrinkage ratio exceeded 20% was evaluated as "×".

### [Measurement conditions]

Measurement temperature range: normal temperature to 200°C
Temperature increasing rate: 5°C/min

### (Chemical resistance evaluation)

A carbon fiber-reinforced composite material (CFRP) was cut into a size of width 25.4 mm × length 254 mm to obtain a test piece for evaluation of chemical resistance. An in-plane shear test was conducted using this test piece according to ASTM D3518. The crosshead speed of a tensile tester was set to 2 mm/min. The in-plane shear test was performed on the test piece after immersion in methyl ethyl ketone for 6 days, and a retention rate (%) of the in-plane shear modulus after immersion in a solvent was calculated. As the solvent, methyl ethyl ketone was used. The retention rate (%) of the in-plane shear modulus was calculated according to the following formula. Retention rate (%) of in-plane shear modulus = (IPSM2/IPSM1) × 100
IPSM1: In-plane shear modulus (GPa) of the test piece not immersed in the solvent
IPSM2: In-plane shear modulus (GPa) of the test piece immersed in the solvent for 6 days

A case where the retention rate of the in-plane shear modulus was 90% or more was evaluated as "∘", and a case where the retention rate of the in-plane shear modulus was less than 90% was evaluated as "×".

### <Components>

The components used in Examples and Comparative Examples are as follows.

### (Reinforcing fiber)

As the reinforcing fiber, the following carbon fiber bundle was used.

Carbon fiber bundle "Tenax (registered trademark)" (manufactured by TEIJIN LIMITED, Product No.: HTS45-12K, tensile strength: 4.5 GPa, tensile modulus: 240 GPa, linear expansion coefficient: -0.5×10⁻⁶/K)

### (Stitching thread)

As the stitching thread, any one of the following stitching threads was used.
- Stitching thread A-1: Polyethersulfone resin fiber manufactured by GUNZE LIMITED, fineness: 220 dtex, number of filaments: 54, single yarn fineness: 4.1 dtex/filament, glass transition point: 207°C, melting point: none
- Stitching thread A-2: Grilon (registered trademark) K-203 manufactured by EMS-CHEMIE AG, copolymerized polyamide resin fiber (PA6/PA12 copolymer), fineness: 33 dtex, number of filaments: 8, single yarn fineness: 4.1 dtex/filament, glass transition point: 51°C, melting point: 194°C
- Stitching thread A-3: 33T-12-SOD0 manufactured by KB SEIREN, LTD., polyester resin fiber, fineness: 33 dtex, number of filaments: 12, single yarn fineness: 2.8 dtex/filament, glass transition point: 78°C, melting point: 257°C
- Stitching thread A-4: JOINER (registered trademark) H-Type manufactured by Fujibo Holdings, Inc., copolymerized polyamide resin fiber, fineness: 33 dtex, number of filaments: 5, single yarn fineness: 6.6 dtex/filament, glass transition point: 39°C, melting point: 130°C
- Stitching thread A-5: Polyetherimide resin fiber manufactured by Kuraray Co., Ltd., fineness: 80 dtex, number of filaments: 12, single yarn fineness: 6.7 dtex/filament, glass transition point: 211°C, melting point: none

### (Matrix resin)

As the matrix resin of the fiber-reinforced composite material (composite), a thermosetting resin formulation containing an epoxy resin, which is a liquid thermosetting resin, as a main component was used. The composition of the thermosetting resin formulation is as follows. In Table 1, the thermosetting resin formulation is abbreviated as TGDDM.

### (Composition of thermosetting resin formulation)

### (Epoxy resin)

- Tetraglycidyl-4,4'-diaminodiphenylmethane (Araldite (registered trademark) MY721 manufactured by Huntsman International LLC.) ··· 56 parts by mass
- N,N-diglycidyl aniline (GAN (product name) manufactured by Nippon Kayaku Co., Ltd.) ··· 30 parts by mass

### (Resin particle component)

- MX-414 (MX-414 (product name) manufactured by KANEKA CORPORATION, average particle diameter: 0.11 µm, masterbatch in which a particulate polybutadiene rubber component was dispersed in a glycidylamine-type tetrafunctional epoxy resin so as to have a concentration of 25 mass%) ··· 19 parts by mass

### (Curing agent)

- 4,4'-Diamino-3,3'-diisopropyl-5,5'-dimethyldiphenylmethane (Lonzacure (registered trademark) M-MIPA d manufactured by arxada JAPAN) ··· 31 parts by mass
- Diethyltoluenediamine (Lonzacure (registered trademark) DETDA80 manufactured by arxada JAPAN) ··· 21 parts by mass

### (Raw materials for resin material layer)

- Polyamide PA12, melting point: 178°C, Daicel-Evonik Corporation (product name: DAIAMID L1640)

### (Resin material layer)

A nonwoven fabric V-1 was produced by a spun-bond method using the above-described polyamide PA12.
- Nonwoven fabric V-1: Polyamide PA12, average fiber diameter: 49.5 µm, fiber areal weight: 5 g/m²

A nonwoven fabric V-2 was produced by a melt-blown method using the above-described polyamide PA12.
- Nonwoven fabric V-2: Polyamide PA12, average fiber diameter: 5.8 µm, fiber areal weight: 5 g/m²

### (Production of stitched reinforcing-fiber multiaxial base material)

- Stitched reinforcing-fiber multiaxial base material NCF-1: Four reinforcing-fiber sheets (reinforcing fiber fiber areal weight per layer: 190 g/m²) in which 200 carbon fiber bundles were aligned in one direction were prepared, and laminated while changing the angles in the order of (-45°/0°/+45°/90°). Next, the reinforcing-fiber sheets were sutured (stitched) through the thickness direction with the stitching thread to obtain a stitched reinforcing-fiber base material.

In NCF1 to NCF8, the stitch patterns and intervals are all the same. The amount of the stitching thread used was [fineness (dtex) of the stitching thread] × 0.12 g/m².
- Stitched reinforcing-fiber multiaxial base material NCF-2: Prepared in the same manner as in the stitched reinforcing-fiber multiaxial base material NCF-1, except that the layup sequence was changed to (90°/+45°/0°/-45°).
- Stitched reinforcing-fiber multiaxial base material NCF-3: Four reinforcing-fiber sheets (reinforcing fiber fiber areal weight per layer: 190 g/m²) in which 200 carbon fiber bundles were aligned in one direction were prepared, and alternately laminated with a nonwoven fabric material (nonwoven fabric fiber areal weight per layer: 5 g/m²) while changing the angles in the order of (-45°/V/0°/V/+45°/V/90°/V) (V represents a nonwoven fabric layer). Next, the reinforcing-fiber sheets were sutured (stitched) through the thickness direction with the stitching thread to obtain a stitched reinforcing-fiber base material.
- Stitched reinforcing-fiber multiaxial base material NCF-4: Prepared in the same manner as in the stitched reinforcing-fiber multiaxial base material NCF-3, except that the layup sequence was changed to (90°/V/+45°/V/0°/V/-45°/V).
- Stitched reinforcing-fiber multiaxial base material NCF-5: Two reinforcing-fiber sheets (reinforcing fiber fiber areal weight per layer: 190 g/m²) in which 200 carbon fiber bundles were aligned in one direction were prepared, and laminated while changing the angles in the order of (-45°/+45°). Next, the reinforcing-fiber sheets were sutured (stitched) through the thickness direction with the stitching thread to obtain a stitched reinforcing-fiber base material.
- Stitched reinforcing-fiber multiaxial base material NCF-6: Prepared in the same manner as in the stitched reinforcing-fiber multiaxial base material NCF-5, except that the layup sequence was changed to (+45°/-45°).
- Stitched reinforcing-fiber multiaxial base material NCF-7: Two reinforcing-fiber sheets (reinforcing fiber fiber areal weight per layer: 190 g/m²) in which 200 carbon fiber bundles were aligned in one direction were prepared, and alternately laminated with a nonwoven fabric material (nonwoven fabric fiber areal weight per layer: 5 g/m²) while changing the angles in the order of (-45°/V/+45°/V). Next, the reinforcing-fiber sheets were sutured (stitched) through the thickness direction with the stitching thread to obtain a stitched reinforcing-fiber base material.
- Stitched reinforcing-fiber multiaxial base material NCF-8: Prepared in the same manner as in the stitched reinforcing-fiber multiaxial base material NCF-7, except that the layup sequence was changed to (+45°/V/-45°/V).

### (Production of laminate of stitched reinforcing-fiber multiaxial base material)

- Laminate L-1: The obtained stitched reinforcing-fiber multiaxial base materials were each cut into 300 × 300 mm. Next, three sheets of NCF-1 and three sheets of NCF-2, i.e., six sheets in total were stacked in this order.
- Laminate L-2: The obtained stitched reinforcing-fiber multiaxial base materials were each cut into 300 × 300 mm. Next, two sheets of NCF-5 and two sheets of NCF-6, i.e., four sheets in total were stacked in this order.

### (Production of preform material)

- Preform P-1: The obtained stitched reinforcing-fiber multiaxial base materials were each cut into 300 × 300 mm. Next, three sheets of NCF-3 and three sheets of NCF-4, i.e., six sheets in total were stacked in this order on a 500 × 500 mm release-treated aluminum plate to obtain a laminate. Release Ply C (manufactured by AIRTECH JAPAN, LTD.) of peel cloth, which is a base material having a releasability function, was laminated to the obtained laminate. A hose for depressurizing the inside was disposed, the whole was covered with a nylon bag film, sealing was performed with a sealant tape, and the inside was evacuated to a vacuum of 5 Torr or less. Subsequently, the aluminum plate was heated to 120°C and held for 30 minutes in a reduced pressure environment in which the inside of the bag was 5 Torr or less, thereby producing the preform material P-1.
- Preform P-2: The obtained stitched reinforcing-fiber multiaxial base materials were each cut into 300 × 300 mm. Next, two sheets of NCF-7 and two sheets of NCF-8, i.e., four sheets in total were stacked in this order on a 500 × 500 mm release-treated aluminum plate to obtain a laminate. Release Ply C (manufactured by AIRTECH JAPAN, LTD.) of peel cloth, which is a base material having a releasability function, was laminated to the obtained laminate. A hose for depressurizing the inside was disposed, the whole was covered with a nylon bag film, sealing was performed with a sealant tape, and the inside was evacuated to a vacuum of 5 Torr or less. Subsequently, the aluminum plate was heated to 120°C and held for 30 minutes in a reduced pressure environment in which the inside of the bag was 5 Torr or less, thereby producing the preform material P-2.

### (Production of carbon fiber-reinforced composite materials for microcrack evaluation and for CAI evaluation)

A carbon fiber-reinforced composite material was produced by a resin transfer molding method (RTM method) using the obtained laminate L-1 or preform material P-1 and the above-described thermosetting resin formulation.

First, Release Ply C (manufactured by AIRTECH JAPAN, LTD.) of peel cloth as a base material having a releasability function and Resin Flow 90HT (manufactured by AIRTECH JAPAN, LTD.) as a resin distribution media material were laminated on the laminate L-1 or the preform material P-1. Thereafter, a hose for forming a resin injection port and a resin bleed port was disposed, the whole was covered with a nylon bag film, sealing was performed with a sealant tape, and the inside was evacuated. Subsequently, an aluminum plate was heated to 120°C, the pressure in the bag was reduced to 5 Torr or less, and then the thermosetting resin formulation (35 parts by mass with respect to 100 parts by mass of the base material) heated to 100°C was injected into the vacuum system through the resin injection port. The inside of the bag was filled with the injected thermosetting resin formulation, and in a state where the bag was impregnated into the base material, the temperature was raised to 180°C and kept at 180°C for 2 hours to cure the thermosetting resin formulation, thereby obtain a carbon fiber-reinforced composite material (CFRP).

### (Production of carbon fiber-reinforced composite material for chemical resistance evaluation)

A carbon fiber-reinforced composite material was produced by the same RTM method as described above using the laminate L-2 or the preform material P-2 instead of the laminate L-1 or the preform material P-1.

### <Example 1>

The stitched reinforcing-fiber multiaxial base materials NCF-1, NCF-2, NCF-5, and NCF-6 were produced using the stitching thread A-1 as it was as the stitching thread. The amount of the stitching thread used in each stitched reinforcing-fiber multiaxial base material was 26.4 g/m² for each of NCF-1, NCF-2, NCF-5, and NCF-6. The total fiber areal weight of each stitched reinforcing-fiber multiaxial base material was 786.4 g/m² for NCF-1 and NCF-2 and 406.4 g/m² for NCF-5 and NCF-6.

As a result of evaluating the heat resistance of the obtained stitched reinforcing-fiber multiaxial base material, the heat resistance was favorable.

The laminate L-1 was produced using the obtained stitched reinforcing-fiber multiaxial base materials NCF-1 and NCF-2. A carbon fiber-reinforced composite material (CFRP) was produced by the above-described RTM method using the obtained laminate L-1. The CAI compression strength and the crack density of the obtained composite material were evaluated. The evaluation results are shown in Table 1. As can be seen from Table 1, in Example 1 using a stitch made of polyethersulfone, generation of microcracks in the carbon fiber-reinforced composite material was controlled.

The laminate L-2 was produced using the obtained stitched reinforcing-fiber multiaxial base materials NCF-5 and NCF-6. A carbon fiber-reinforced composite material (CFRP) was produced by the above-described RTM method using the obtained laminate L-2. As a result of evaluating the chemical resistance of the obtained composite material, the chemical resistance was favorable.

### <Example 2>

A stitched reinforcing-fiber multiaxial base material, a laminate, and a carbon fiber-reinforced composite material were produced in the same manner as in Example 1, except that a stitching thread obtained by dividing the stitching thread A-1 to reduce the total fineness was used as the stitching thread, and evaluation was performed. The evaluation results are shown in Table 1. The amount of the stitching thread used in each stitched reinforcing-fiber multiaxial base material was 13.2 g/m² for each of NCF-1, NCF-2, NCF-5, and NCF-6. The total fiber areal weight of each stitched reinforcing-fiber multiaxial base material was 773.2 g/m² for NCF-1 and NCF-2 and 393.2 g/m² for NCF-5 and NCF-6.

### <Example 3>

A stitched reinforcing-fiber multiaxial base material, a laminate, and a carbon fiber-reinforced composite material were produced in the same manner as in Example 1, except that a stitching thread obtained by dividing the stitching thread A-1 to reduce the total fineness was used as the stitching thread, and evaluation was performed. The evaluation results are shown in Table 1. The amount of the stitching thread used in each stitched reinforcing-fiber multiaxial base material was 3.96 g/m² for each of NCF-1, NCF-2, NCF-5, and NCF-6. The total fiber areal weight of each stitched reinforcing-fiber multiaxial base material was 763.96 g/m² for NCF-1 and NCF-2 and 383.96 g/m² for NCF-5 and NCF-6.

In Examples 2 and 3, the heat resistance of the stitched reinforcing-fiber multiaxial base material was favorable in both cases, generation of microcracks in the carbon fiber-reinforced composite material was controlled, and the chemical resistance of the carbon fiber-reinforced composite material was favorable.

As is apparent from the comparison between Comparative Example 1 and Comparative Example 2 and the comparison between Comparative Example 3 and Comparative Example 4 described later, the microcrack resistance is reduced as the number of filaments of the stitching thread increases, but such a tendency was not observed in Examples 1 to 3, and all of Examples 1 to 3 exhibited high microcrack resistance.

### <Comparative Example 1>

A stitched reinforcing-fiber multiaxial base material, a laminate, and a carbon fiber-reinforced composite material were produced in the same manner as in Example 1, except that the stitching thread A-2 was used as the stitching thread instead of the stitching thread A-1, and evaluation was performed. The evaluation results are shown in Table 1. The amount of the stitching thread used in each stitched reinforcing-fiber multiaxial base material was 3.96 g/m² for each of NCF-1, NCF-2, NCF-5, and NCF-6. The total fiber areal weight of each stitched reinforcing-fiber multiaxial base material was 763.96 g/m² for NCF-1 and NCF-2 and 383.96 g/m² for NCF-5 and NCF-6.

In the carbon fiber-reinforced composite material, generation of microcracks was remarkably confirmed, the crack density was as relatively high as 0.59 cracks/(cm·ply).

### <Comparative Example 2>

A stitched reinforcing-fiber multiaxial base material, a laminate, and a carbon fiber-reinforced composite material were produced in the same manner as in Comparative Example 1, except that stitching thread obtained by dividing the stitching was performed with three stitching threads A-2 combined, and evaluation was performed. The evaluation results are shown in Table 1. The amount of the stitching thread used in each stitched reinforcing-fiber multiaxial base material was 11.88 g/m² for each of NCF-1, NCF-2, NCF-5, and NCF-6. The total fiber areal weight of each stitched reinforcing-fiber multiaxial base material was 771.88 g/m² for NCF-1 and NCF-2 and 391.88 g/m² for NCF-5 and NCF-6.

In the carbon fiber-reinforced composite material, generation of microcracks was remarkably confirmed, the crack density was as high as 2.21 cracks/(cm·ply). Since the stitching thread used in Comparative Example 2 had a relatively high total fineness, it is considered that the microcrack resistance was inferior to Comparative Example 1.

### <Comparative Example 3>

A stitched reinforcing-fiber multiaxial base material, a laminate, and a carbon fiber-reinforced composite material were produced in the same manner as in Example 1, except that the stitching thread A-3 was used as the stitching thread instead of the stitching thread A-1, and evaluation was performed. The evaluation results are shown in Table 1. The amount of the stitching thread used in each stitched reinforcing-fiber multiaxial base material was 3.96 g/m² for each of NCF-1, NCF-2, NCF-5, and NCF-6. The total fiber areal weight of each stitched reinforcing-fiber multiaxial base material was 763.96 g/m² for NCF-1 and NCF-2 and 383.96 g/m² for NCF-5 and NCF-6.

In the carbon fiber-reinforced composite material, generation of microcracks was remarkably confirmed, the crack density was as high as 0.78 cracks/(cm·ply).

### <Comparative Example 4>

A stitched reinforcing-fiber multiaxial base material, a laminate, and a carbon fiber-reinforced composite material were produced in the same manner as in Comparative Example 3, except that stitching thread obtained by dividing the stitching was performed with three stitching threads A-3 combined, and evaluation was performed. The evaluation results are shown in Table 1. The amount of the stitching thread used in each stitched reinforcing-fiber multiaxial base material was 11.88 g/m² for each of NCF-1, NCF-2, NCF-5, and NCF-6. The total fiber areal weight of each stitched reinforcing-fiber multiaxial base material was 771.88 g/m² for NCF-1 and NCF-2 and 391.88 g/m² for NCF-5 and NCF-6.

In the carbon fiber-reinforced composite material, generation of microcracks was remarkably confirmed, the crack density was as high as 2.43 cracks/(cm·ply). Since the stitching thread used in Comparative Example 4 had a relatively high total fineness, it is considered that the microcrack resistance was inferior to Comparative Example 3.

### <Comparative Example 5>

A stitched reinforcing-fiber multiaxial base material, a laminate, and a carbon fiber-reinforced composite material were produced in the same manner as in Example 1, except that the stitching thread A-4 was used as the stitching thread instead of the stitching thread A-1, and evaluation was performed. The evaluation results are shown in Table 1. The amount of the stitching thread used in each stitched reinforcing-fiber multiaxial base material was 3.96 g/m² for each of NCF-1, NCF-2, NCF-5, and NCF-6. The total fiber areal weight of each stitched reinforcing-fiber multiaxial base material was 763.96 g/m² for NCF-1 and NCF-2 and 383.96 g/m² for NCF-5 and NCF-6.

In Comparative Example 5, microcracks were not generated in the carbon fiber-reinforced composite material. However, since the stitching thread used in Comparative Example 5 had a relatively low melting point, the heat resistance of the stitched reinforcing-fiber multiaxial base material was poor.

### <Comparative Example 6>

A stitched reinforcing-fiber multiaxial base material, a laminate, and a carbon fiber composite material were produced in the same manner as in Example 1, except that the stitching thread A-5 was used as the stitching thread instead of the stitching thread A-1, and evaluation was performed. The evaluation results are shown in Table 1. The amount of the stitching thread used in each stitched reinforcing-fiber multiaxial base material was 9.6 g/m² for each of NCF-1, NCF-2, NCF-5, and NCF-6. The total fiber areal weight of each stitched reinforcing-fiber multiaxial base material was 769.6 g/m² for NCF-1 and NCF-2 and 389.6 g/m² for NCF-5 and NCF-6.

In Comparative Example 6, microcracks were not generated in the carbon fiber-reinforced composite material. However, the chemical resistance of the carbon fiber-reinforced composite material was poor because the stitching thread A-5 having relatively poor chemical resistance was used.

### <Example 4>

The stitched reinforcing-fiber multiaxial base materials NCF-3, NCF-4, NCF-7, and NCF-8 were produced using A-1 as it was as the stitching thread and using V-1 as the nonwoven fabric. The amount of the stitching thread used in each stitched reinforcing-fiber multiaxial base material was 26.4 g/m² for each of NCF-3, NCF-4, NCF-7, and NCF-8. The total fiber areal weight of each stitched reinforcing-fiber multiaxial base material was 806.4 g/m² for NCF-3 and NCF-4 and 416.4 g/m² for NCF-5 and NCF-6.

As a result of evaluating the heat resistance of each of the obtained stitched reinforcing-fiber multiaxial base materials, the heat resistance was favorable in all cases.

The preform material P-1 was produced using the obtained stitched reinforcing-fiber multiaxial base materials NCF-3 and NCF-4. A carbon fiber-reinforced composite material (CFRP) was produced by the above-described RTM method using the obtained preform material P-1, and evaluation was performed. The evaluation results are shown in Table 1. In Example 4, microcracks were hardly generated in the carbon fiber-reinforced composite material, and the crack density was as low as 0.15 cracks/(cm·ply). Even when the nonwoven fabric was disposed, it could be confirmed that formation of microcracks was controlled by using the stitching thread A-1. By placing the nonwoven fabric, the CAI compression strength of the composite material was improved as compared with Example 1 in which the nonwoven fabric was not disposed.

The preform material P-2 was produced using the obtained NCF-7 and NCF-8. A carbon fiber-reinforced composite material (CFRP) was produced by the above-described RTM method using the obtained preform material P-2. As a result of evaluating the chemical resistance of the obtained composite material, the chemical resistance was favorable.

### <Example 5>

A stitched reinforcing-fiber multiaxial base material, a preform material, and a carbon fiber-reinforced composite material were produced in the same manner as in Example 4, except that the nonwoven fabric V-2 was used as the nonwoven fabric instead of the nonwoven fabric V-1, and evaluation was performed. The evaluation results are shown in Table 1. The amount of the stitching thread used in each stitched reinforcing-fiber multiaxial base material was 26.4 g/m² for each of NCF-3, NCF-4, NCF-7, and NCF-8. The total fiber areal weight of each stitched reinforcing-fiber multiaxial base material was 806.4 g/m² for NCF-3 and NCF-4 and 416.4 g/m² for NCF-5 and NCF-6.

In Example 5, generation of microcracks in the carbon fiber-reinforced composite material (CFRP) was controlled. In Example 5, microcracks originating from the nonwoven fabric were not generated by using the small-fiber-diameter nonwoven fabric produced by the melt-blown method.

### <Comparative Example 7>

A stitched reinforcing-fiber multiaxial base material, a preform material, and a carbon fiber-reinforced composite material were produced in the same manner as in Example 4, except that the stitching thread A-2 was used as the stitching thread instead of the stitching thread A-1, and evaluation was performed. The evaluation results are shown in Table 1. The amount of the stitching thread used in each stitched reinforcing-fiber multiaxial base material was 3.96 g/m² for each of NCF-3, NCF-4, NCF-7, and NCF-8. The total fiber areal weight of each stitched reinforcing-fiber multiaxial base material was 783.96 g/m² for NCF-3 and NCF-4 and 393.96 g/m² for NCF-5 and NCF-6.

In Comparative Example 7, generation of microcracks was confirmed, and the crack density was as relatively high as 0.73 cracks/(cm·ply).

### [Table 1]

**(Table 1)**

| | Stitching thread | | | | | | | Heat resistance of NCF base material | CFRP | | | | | | |
|---|---|---|---|---|---|---|---|---|---|---|---|---|---|---|---|
| | Type | Composition | Total fineness [dTex] | Number of filaments [filaments] | Single yarn fineness [dTex/filament] | Tg [°C] | Melting point peak [°C] | | Matrix resin | Tg of stitching thread in resin [°C] | Melting point peak of stitching thread in resin [°C] | Interlayer nonwoven fabric | Crack density [cracks/(cm-ply)] | Chemical resistance | CAI compression strength [MPa] |
| Example 1 | A-1 | PES | 220 | 54 | 4.1 | 207 | - | ○ | TGDDM | 182 | - | - | 0.00 | ○ | 194 |
| Example 2 | A-1 | PES | 110 | 27 | 4.1 | 207 | - | ○ | TGDDM | 182 | - | - | 0.00 | ○ | 193 |
| Example 3 | A-1 | PES | 33 | 8 | 4.1 | 207 | - | ○ | TGDDM | 182 | - | - | 0.00 | ○ | 202 |
| Comparative Example 1 | A-2 | PA6/PA12 CoPA | 33 | 8 | 4.1 | 51 | 194 | ○ | TGDDM | Unobser vable | 199 | - | 0.59 | ○ | - |
| Comparative Example 2 | A-2 | PA6/PA12 CoPA | 33×3 | 8×3 | 4.1 | 51 | 194 | ○ | TGDDM | Unobser vable | 199 | - | 2.21 | ○ | - |
| Comparative Example 3 | A-3 | PET | 33 | 12 | 2.8 | 78 | 254 | ○ | TGDDM | 78 | 211 | - | 0.78 | ○ | - |
| Comparative Example 4 | A-3 | PET | 33×3 | 12×3 | 2.8 | 78 | 254 | ○ | TGDDM | 78 | 211 | - | 2.43 | ○ | - |
| Comparative Example 5 | A4 | PA6/PA12 CoPA | 33 | 5 | 6.6 | 39 | 130 | × | TGDDM | Unobser vable | 119 | - | 0.00 | ○ | - |
| Comparative Example 6 | A-5 | PEI | 80 | 12 | 6.7 | 211 | - | ○ | TGDDM | 182 | - | - | 0.00 | × | - |
| Example 4 | A-1 | PES | 220 | 54 | 4.1 | 207 | - | ○ | TGDDM | 182 | - | Nonwoven fabric V-1 | 0.15 | ○ | 289 |
| Example 5 | A-1 | PES | 220 | 54 | 4.1 | 207 | - | ○ | TGDDM | 182 | - | Nonwoven fabric V-2 | 0.00 | ○ | 301 |
| Comparative Example 7 | A-2 | PA6/PA12 CoPA | 33 | 8 | 4.1 | 51 | 194 | ○ | TGDDM | Unobser vable | 199 | Nonwoven fabric V-1 | 0.73 | ○ | 280 |

## Claims

1. A stitched reinforcing-fiber base material comprising:
a reinforcing-fiber base material composed of reinforcing fibers; and
a stitching thread including a polyethersulfone fiber,
wherein the reinforcing-fiber base material is stitched with the stitching thread.

2. The stitched reinforcing-fiber base material according to claim 1, wherein the reinforcing-fiber base material is a reinforcing-fiber base material composed of a reinforcing-fiber sheet composed of reinforcing fibers aligned in unidirection.

3. The stitched reinforcing-fiber base material according to claim 2, wherein the reinforcing-fiber base material is a multiaxial base material formed by laminating a plurality of the reinforcing-fiber sheets while mutually changing angles of fiber axes.

4. The stitched reinforcing-fiber base material according to any one of claims 1 to 3, wherein the reinforcing-fiber base material is a reinforcing-fiber base material formed by placed a resin material on a surface of the reinforcing-fiber base material and/or between layers composed of reinforcing fibers.

5. The stitched reinforcing-fiber base material according to any one of claims 1 to 3, wherein a single yarn fineness of the stitching thread is 1 to 10 dtex/filament.

6. The stitched reinforcing-fiber base material according to any one of claims 1 to 3, wherein a total fineness of the stitching thread is 1 to 250 dtex.

7. The stitched reinforcing-fiber base material according to any one of claims 1 to 3, wherein the number of filaments of the stitching thread is 1 to 60.

8. The stitched reinforcing-fiber base material according to any one of claims 1 to 3, wherein the polyethersulfone fiber is a polyethersulfone fiber composed of polyethersulfone having a glass transition point of 160 to 250°C.

9. The stitched reinforcing-fiber base material according to any one of claims 1 to 3, wherein a content ratio of the stitching thread is 0.1 to 30 mass% with respect to a mass of the stitched reinforcing-fiber base material.

10. A method for producing the stitched reinforcing-fiber base material according to any one of claims 1 to 3, the method comprising stitching a reinforcing-fiber base material composed of reinforcing fibers with a stitching thread including a polyethersulfone fiber.

11. A preform material comprising:
the stitched reinforcing-fiber base material according to any one of claims 1 to 3; and
1 to 20 parts by mass of a binder resin with respect to 100 parts by mass of the stitched reinforcing-fiber base material.

12. A method for producing a preform material, the method comprising heating, under pressure,
the stitched reinforcing-fiber base material according to any one of claims 1 to 3 and
1 to 20 parts by mass of a binder resin with respect to 100 parts by mass of the stitched reinforcing-fiber base material.

13. A fiber-reinforced composite material comprising:
the stitched reinforcing-fiber base material according to any one of claims 1 to 3; and
a matrix resin impregnated into the stitched reinforcing-fiber base material.

14. A method for producing a fiber-reinforced composite material, the method comprising impregnating a matrix resin into the stitched reinforcing-fiber base material according to any one of claims 1 to 3.

15. A method for producing a fiber-reinforced composite material, the method comprising impregnating a matrix resin into the preform material according to claim 11.
